# EUROPEAN PATENT SPECIFICATION

(11) **EP 0 248 665 B1**
(45) Date of publication and mention of the grant of the patent: **18.05.1994**
(21) Application number: 87304948.0
(22) Date of filing: 04.06.1987
(51) Int. Cl.: H01F 1/04, H01F 1/08

(54) **Rare earth-iron magnet and method of making same**
Seltene Erden-Eisenmagnet und Herstellungsverfahren
Aimant à base de terre rare et fer et procédé de fabrication

(30) Priority: 06.06.1986 JP 131487/86; 06.06.1986 JP 131488/86; 01.07.1986 JP 154456/86; 02.07.1986 JP 155751/86
(43) Date of publication of application: 09.12.1987
(73) Proprietor: SEIKO INSTRUMENTS INC., Tokyo 136 (JP)
(72) Inventor: Suzuki, Teruo, Koto-ku Tokyo (JP); Kishi, Matsuo, Koto-ku Tokyo (JP); Muraishi, Katsuyoshi, Koto-ku Tokyo (JP); Ogawa, Kenichi, Koto-ku Tokyo (JP); Takashio, Hiroshi, Koto-ku Tokyo (JP)
(74) Representative: Sturt, Clifford Mark

(56) References cited:
- EP-A- 0 125 752
- EP-A- 0 126 179
- DE-A- 3 321 905
- PATENT ABSTRACTS OF JAPAN, vol. 9, no. 185 (E-332)[1908], 31st July 1985; & JP-A-60 54 406
- PATENT ABSTRACTS OF JAPAN, vol. 9, no. 197 (E-335)[1920], 14th August 1985; & JP-A-60 63 902
- PATENT ABSTRACTS OF JAPAN, vol. 6, no. 144 (E-122)[1022], 3rd August 1982;& JP-A-57 66 604

## Description

This invention relates to rare earth-iron magnets and methods making the same.

A Sm-Co base magnet has been conventionally used as a high energy permanent magnet. However, rare earth-iron based magnets have recently attracted attention because of their low cost, good mechanical processing and higher energy product. Particularly, a magnet having a composition comprising, in terms of atomic percent, 8 to 30% R (where R is at least one rare earth element including Yttrium (Y)), 2 to 28% boron with the balance being iron and unavoidable impurities, or 8 to 30% R, 2 to 28% B, more than zero and not exceeding 50% Co, and the balance being Fe with impurities, are disclosed in EP-A-101552 and EP-A-106948.

However, rare earth-iron base magnets are inferior in corrosion and chemical resistance to Sm-Co base magnets and require treatment of the surface thereof. An attempt has been made to treat the surface of rare earth-iron base magnets with aluminium chromate.

A rare earth-iron base magnet produced by a sintering process has poor corrosion and chemical resistance, and particularly poor acid and alkali resistance because iron is the main component. Further, rare earth-iron base magnets have voids therein. Consequently, when a wet treatment is conducted for corrosion protection, the treatment chemical enters the voids in the rare earth-iron base magnet and remains there. This brings about corrosion of the inside of the magnet and blistering of any surface coating layer.

For example, in surface treatment such as wet plating, the surface of the rare earth-iron base magnet is attacked during pretreatment with acid, alkali or the like, or during plating. Even when the plating is successfully conducted, internal corrosion and erosion at the voids between grains occurs due to chemicals which have penetrated into the inside of the rare earth-iron base magnet during surface treatment. An example of such plating can be found in Japanese patent publication no. 60-54406. The occurrence of corrosion leads to deterioration of magnetic characteristics. For example, in the case of a rotor magnet for a step motor of a watch, the magnetic characteristics are lowered by about 10% at any early stage as compared with an untreated magnet, and are further lowered with lapse of time At the same time, mechanical strength is also reduced.

Japanese patent publication no. 60-63902 by Sumitomo discloses dipping the rare earth-iron magnet in phosphate and sodium carbonate and then spraying with epoxy or acrylic resin to improve resistance to oxidation. However, this resultant rare earth-iron magnet is still susceptible to corrosion as defects are liable to occur in the resin coating leaving the raw rare earth-iron exposed.

According to the present invention there is provided a method of treating a rare earth-iron magnet consisting of a magnetic phase based on one or more rare earth elements and iron having voids between grains of said magnet, said method characterised by the steps of:
impregnating the magnet by soaking in a pressure reduction vessel containing anaerobic sealing agent to fill said voids;
plating a layer on the surface of said magnet.

The magnetic phase may comprise Fe, B and R where R is at least one rare earth element including Y. In this case the magnetic phase may consist essentially of, by atomic percent, 8-30% R, 2-28% B, and the balance being Fe with impurities.

The invention is illustrated, merely by way of example, in the accompanying drawings, in which:-
Figure 1 is a partial sectional view of one embodiment of a rare earth-iron magnet according to the present invention; and
Figure 2 is a partial sectional view of another embodiment of a rare earth-iron magnet according to the present invention.

As previously noted, the present invention seeks to provide an improved treatment of the surface of rare earth-iron magnets. In the present invention, voids among the grains of the magnet are filled with a sealing agent and on the entire surface of the magnet there is formed a coating layer, such as a plating layer, an organic coating, an organic polymer coating or a metal-organic polymer composite coating.

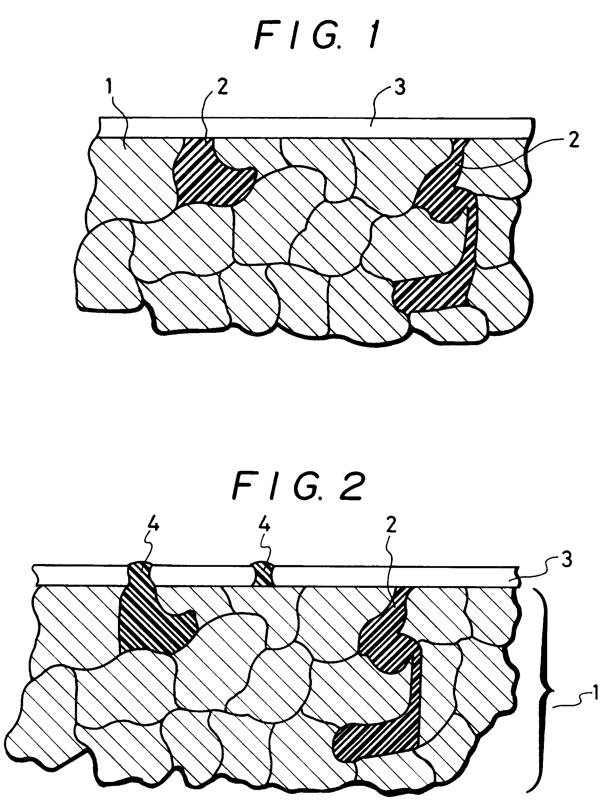

In Figure 1, reference numeral 1 indicates a sintered rare earth-iron magnet according to the present invention. The magnet produced by sintering has voids among the grains of the magnet. These voids are filled with a sealing agent 2. Examples of sealing agent are linseed oil, wax, water glass, polyester resin, phenolic resin, epoxy resin and anaerobic resin. The sealing agent is poured into the voids in a liquid state and then cured. On the surface of the magnet is formed a coating layer 3.

The invention is illustrated in more detail by the following non-limiting examples.

### EXAMPLE 1

As starting material, electrolytic iron, boron and neodium whose purity is 99.5% or more were used. The starting material was melted by a high-frequency melting technique and then cast into a water-cooled copper mould. As a result, an ingot composed of 16Nd-8B-76Fe was produced.

Next, the ingot was ground by a stamp mill and a ball mill, producing a powder whose particle size is 3 to 10 micron. The powder was put in a metal mould, orientated in a magnetic field of 15KOe, and moulded by a pressure of 1.5 t/cm² in parallel with the magnetic field. The moulded product was sintered at 1100°C for one hour in argon and allowed to cool. An ageing process was conducted at 600°C for one hour, to produce a permanent rare earth-iron magnet.

The permanent magnet obtained above was cut into pieces with sizes of 20mm x 10mm x 5mm. Then, grease was removed using an organic solvent. Subsequently, minute voids in the magnet pieces were filled by a reduced pressure technique. In order to fill the voids, the pieces were soaked in a pressure reduction vessel containing an anaerobic adhesive solvent, and left there with the pressure reduced (1 Torr) for 3 minutes. Then, the pressure was restored to atmospheric pressure, and the voids were filled. The unhardened anaerobic adhesive solvent on the surfaces of the magnet pieces was removed by alkali and the surfaces cleaned by acid. Subsequently, various plating processes were conducted under the conditions shown in Table 1 to produce rare earth-iron magnets according to the present invention. Then, the corrosion resistance, adhesion and magnetic characteristics after plating were evaluated. The results are shown in Table 2.

The corrosion resistance was evaluated by the appearance of sample magnets placed in a room at 60°C and 90% relative humidity for 240 hours. The adhesion was evaluated by conducting a pulling test by means of adhesive tapes and checking if a thin film layer formed on the surface by the plating process peeled off. In Table 1, the electroless plating sample was prepared as well-known using tin(II) chloride and paladium chloride solutions.

An unplated magnet having the same constitution as that of the rare earth-iron magnets according to the present invention underwent the same evaluation of corrosion resistance and magnetic characteristics. The result is also shown in Table 2 for comparison.

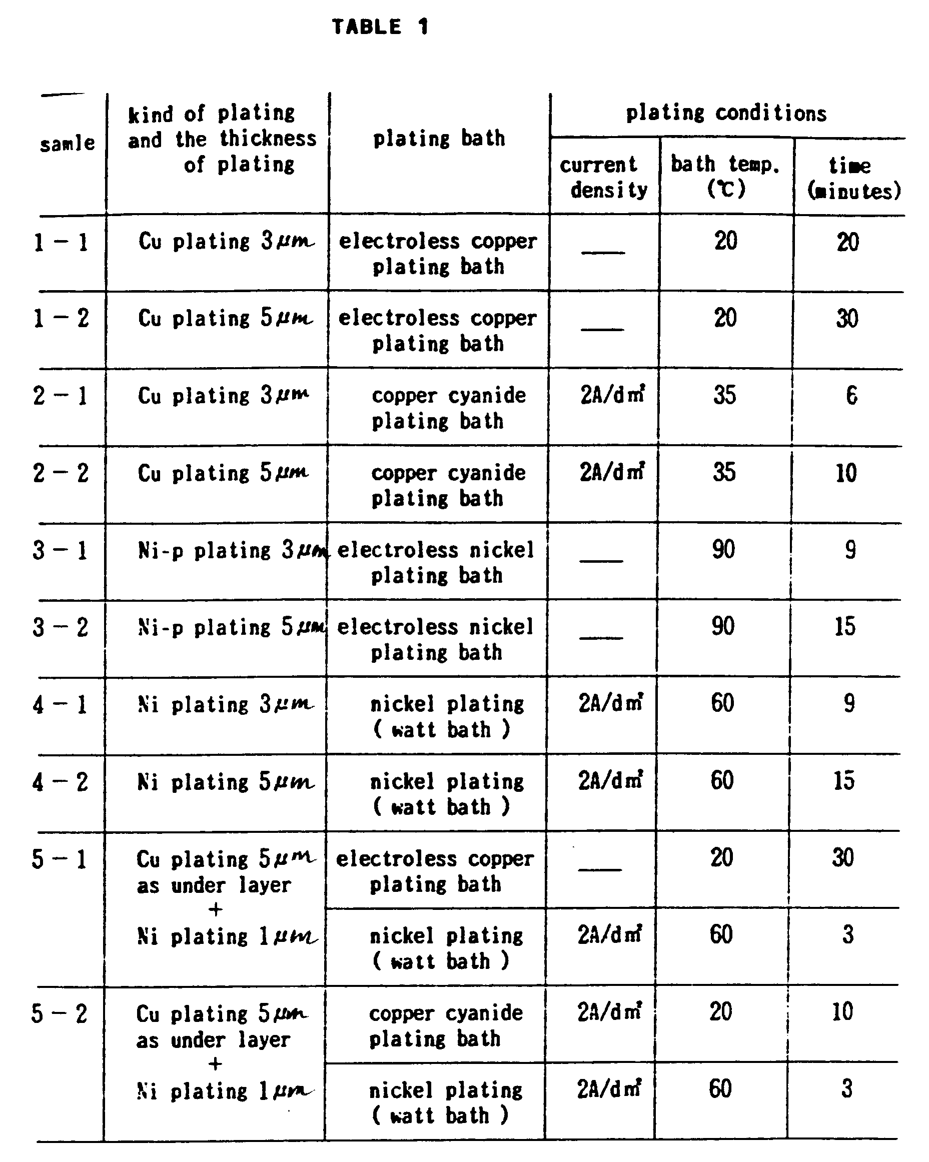

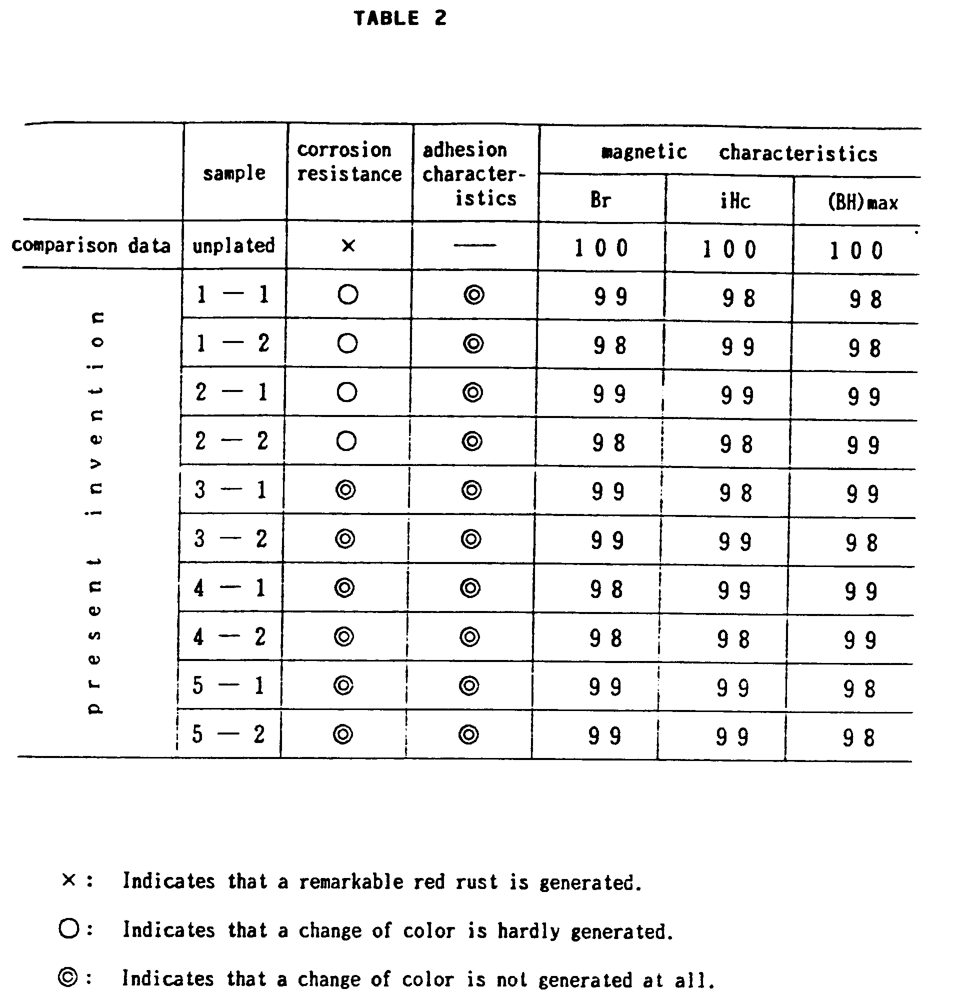

As will be appreciated from Table 2, the unplated magnet sample generates marked red rust on the surface as a result of testing corrosion resistance. On the other hand, the rare earth-iron magnet presents sufficient corrosion resistance. Moreover, the surface processing hardly causes a change in the magnetic characteristics. That is, a NdFe magnet is produced having excellent reliability.

### EXAMPLE 2

A rotor of a step motor for a watch, which was formed from a sintered Nd-Fe-B base magnet, was washed with trichloroethylene. Subsequently, the rotor was immersed in an anaerobic adhesive solvent the viscosity of which have been adjusted to 10cP.

The rotor immersed in the anaerobic adhesive was placed in a vacuum chamber (1 Torr) and allowed to stand for 5 minutes. The pressure was then returned to atmospheric pressure. Thus, the anaerobic adhesive penetrated voids between the grains of the sintered magnet and was cured. Thereafter, the anaerobic adhesive remaining uncured was dissolved and washed away with alcohol. A 5 micron-thick organic coating layer comprising poly-p-xylene was formed on the surface of the rotor by vacuum deposition, thereby to obtain a final product. The rotor thus obtained was allowed to stand in a thermo-hygrostatic atmosphere kept at a temperature of 40°C and a relative humidity of 95% for 200 hours. As a result, it was found that the rotor neither rusted nor discoloured and had a satisfactory quality for use as a rotor in a step motor for an electronic watch.

The rare earth-iron base magnet thus obtained completely prevents the penetration of chemicals, water, etc. thereinto from the outside by virtue of the filling of the voids between the grains with a sealing agent and, at the same time, prevents discolouration and rusting by virtue of the presence of the organic coating layer on the surface thereof. Linseed oil, wax, varnish, water glass, polyester resin, phenolic resin, epoxy resin, etc. can also be employed as the sealing agent instead of the described anaerobic adhesive. Moreover, the organic coating may be a coating agent such as a fluororesin.

Alternatively, the surface of a magnet has a sealing agent filling the voids between the grains of the magnet and a plasma-polymerised coating layer, such as an organic polymer coating layer or metal-organic polymer composite coating layer, covering the entire surface of the magnet. The provision of the sealing agent and the coating layer enhances the corrosion resistance and long-term stability of magnetic characteristics because the plasma-polymerised coating is pinhole-free due to its high denseness and because the sealing agent fills the void between the grains.

A coating layer having a dense network structure can be formed through a complicated combination of a process of forming a polymer intermediate in a gas phase from a monomer and depositing the intermediate on a substrate to form a polymer coating thereon, a process of polymerising a monomer, dimer or trimer adsorbed onto the surface of a substrate through activation by means of a plasma, with a process of eliminating the formed polymer by means of etching. Therefore, the formed coating layer is free from pinholes despite being thin and, at the same time, has excellent wear and chemical resistance. Further, since the coating is applied in a gas phase, the formed polymer can be applied even onto tiny voids. Moreover, a metal-polymer composite coating can be formed by vapourising a metal when the plasma-polymerisation is conducted, which enables further improvement in wear resistance.

The corrosion resistance, magnetic stability and mechanical strength of the magnet are improved through a combination of the above-mentioned formation of a polymer coating with the treatment for filling the voids between magnet grains, in which a plasma-polymerised coating is formed only with difficulty, with a sealing agent.

### EXAMPLE 3

A rotor of a step motor for a watch, which was formed from a sintered Nd-Fe-B base magnet was cleaned with a solvent. The rotor was then immersed in an anaerobic resin comprising an acrylic resin, the viscosity of which had been adjusted to 10cP, under a vacuum of 1 Torr for 5 minutes. The rotor was allowed to stand in air, thereby curing the resin present in the voids between the grains and the magnet. The uncured resin present on the surface of the magnet was removed with alcohol. An argon gas and a methyl acrylate monomer were fed to a plasma polymerisation apparatus of the internal electrode type. A plasma was generated under 3 x 10⁻¹ Torr with a high-frequency power source of 13.56 MHz to conduct plasma polymerisation, thereby forming a 0.5 micron-thick polymethyl acrylate coating.

The rotor thus formed was entirely coated, including the voids between the grains, with the anaerobic resin and polymethyl acrylate coating. In a thermohygrostatic test conducted at a temperature of 40°C and a relative humidity of 95% for 100 hours, the rotor exhibited excellent corrosion resistance and also exhibited remarkably excellent long-term stability without any lowering in mechanical strength and magnetic characteristics.

### Example 4

The voids of a sintered Nd-Fe-B base magnet were filled with a sealing agent. A high-frequency ion plating device was evacuated to 5 x 10⁻⁵ Torr. Argon gas was used to conduct ion bombardment. Plasma polymerisation was then conducted using an ethylene monomer under a pressure of 1 x 10⁻³ Torr by applying high-frequency electric power of 13.56 MHz at 100W while evaporating aluminium through resistance heating, thereby forming a 0.4 micron-thick aluminium-polyester composite layer coating, the aluminium being uniformly distributed in the polyester polymer.

The magnet thus obtained had excellent corrosion resistance, magnetic stability and mechanical strength like the magnet obtained in Example 3. Further, the magnet had an enhanced coating strength and an excellent wear resistance by virtue of the aluminium in the coating.

In a further embodiment of the present invention, a magnet having excellent corrosion resistance was provided by filling the voids present in the inside of a magnet produced by sintering with a sealing agent, coating the surface thereof with a coating layer such as a plating layer and filling the defective portion of resulting coating layer and the voids present in the inside of the magnet again with the sealing agent, thereby shielding the magnet material from any corrosive atmosphere.

That is, a magnet produced by sintering was subjected to a treatment comprising filling the voids present in the inside of the magnet with a sealing agent by vacuum impregnation or the like, coating the surface of the magnet with a coating layer by wet plating, dry plating or the like and filling the defective portion of the coating layer and voids present in the inside of the magnet again with the sealing agent.

The above-mentioned treatment serves to shield the voids in the inside of the magnet, formed during the production of the magnet, from the outside corrosive atmosphere and chemicals used in the subsequent steps of treatment by virtue of the initial filling of the voids with sealing agent and, therefore, prevents the occurrence of corrosion.

The coating layer shields the surface of the magnet from the outside corrosive atmosphere and, therefore, prevents the occurrence of corrosion.

Further, the voids in the magnet newly produced during formation of the coating layer made of a sealing agent on the surface of the magnet as well as defective portions of the resulting coating layer, are shielded from the outside corrosive atmosphere by the second application of the sealing agent, which prevents the occurrence of corrosion.

It will be appreciated that the voids produced during the production of the magnet and existing without communicating with the surface of the magnet are free from the effects of corrosion even when they are not filled with the sealing agent because they are not exposed to the chemicals used in the formation of the coating and the outside corrosive atmosphere.

A further embodiment of the present invention will now be described in more detail with reference to Figure 2 and Examples 5 and 6.

Referring to Figure 2 there is illustrated another embodiment of a rare earth-iron magnet according to the present invention. Reference numeral 4 is a sealing agent applied after a coating layer 3 composed of a plating layer, organic coating or plasma-polymerised coating, to defective portions of the coating layer and to voids present in the inside of the magnet. Reference numeral 2 indicates a sealing agent applied prior to the coating layer 3 into the voids inside the magnet.

### EXAMPLE 5

A Nd-B-Fe base magnet produced by sintering was impregnated in vacuo with a sealing agent comprised mainly of an acrylic ester and was allowed to stand at room temperature for 10 minutes. The uncured resin present on the surface thereof was removed using an organic solvent.

Then, the surface of the magnet was washed and activated, followed by the formation of an electroless copper plating layer with a thickness of 5 microns. Subsequently, an electroless nickel plating layer was formed thereon with a thickness of 2 microns.

Finally, the magnet was impregnated in vacuo again with a sealing agent comprised mainly of an acrylic ester and was allowed to stand at room temperature for 10 minutes. Thereafter, the uncured resin present on the surface thereof was removed using an organic solvent.

The magnet thus obtained was subjected to a thermo-hygrostatic test (40°C, 95%, 100 hours). In the test, the magnet exhibited an excellent corrosion resistance (see Table 3).

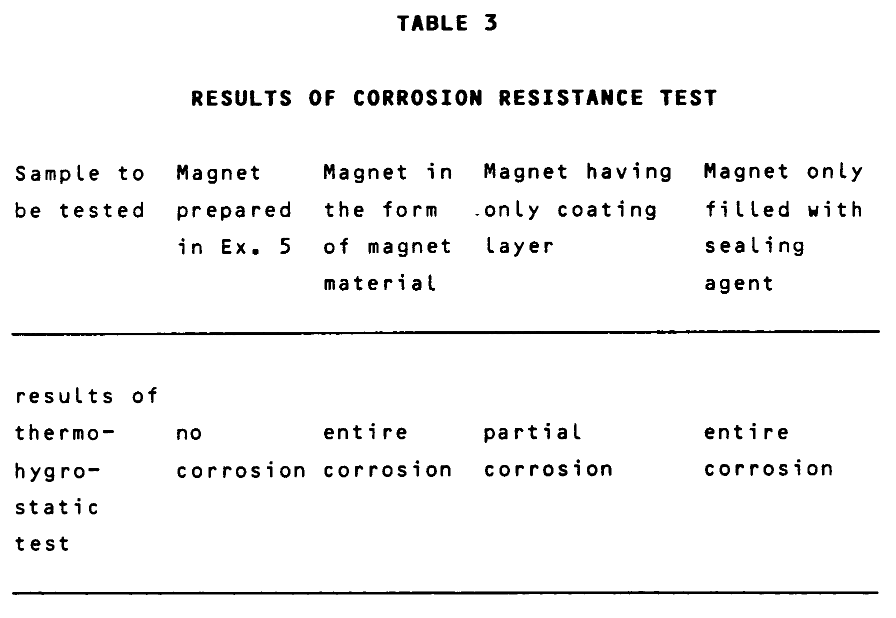

### EXAMPLE 6

A Nd-B-Fe base magnet produced by sintering was impregnated in vacuo with a sealing agent comprised mainly of an acrylic ester and was allowed to stand at room temperature for 10 minutes. The uncured resin present on the surface thereof was removed using an organic solvent.

Subsequently, the magnet was degreased and washed with trichloroethylene, followed by the formation of a metallic titanium coating and titanium nitride coating with a thickness of about 3 microns on the surface of the magnet. Prior to the coating, the surface of the magnet was cleaned in a film forming device by ion bombardment through discharge of argon gas.

Finally, a coating of poly-p-xylene (e.g. Parylene manufactured by Union Carbide Corporation) was formed in a thickness of about 5 microns by vacuum deposition.

The magnet thus obtained was subjected to a thermo-hygrostatic test (40°C, 95%, 100 hours). In the test, the magnet exhibited excellent corrosion resistance (see Table 4).

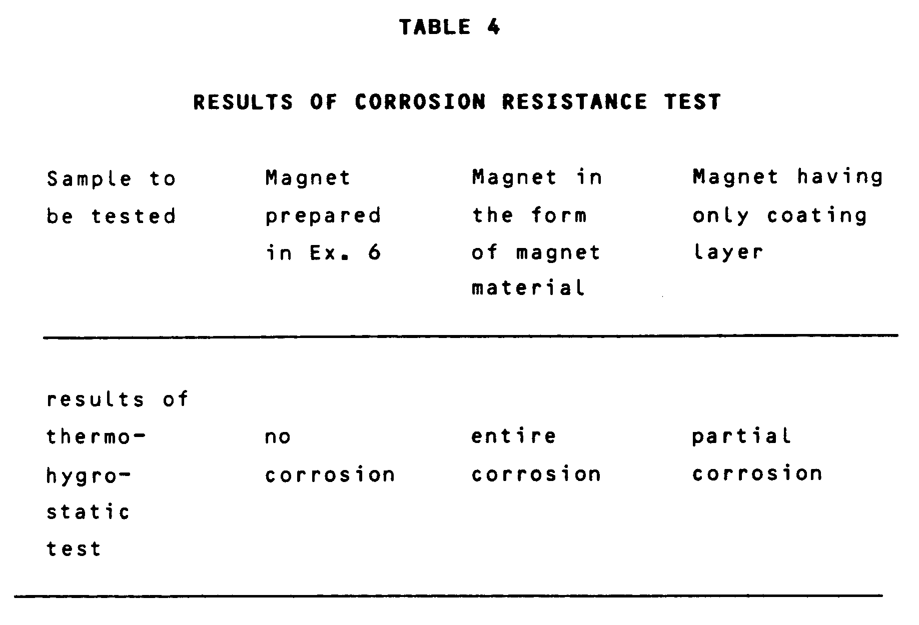

As mentioned above, the present invention prevents the penetration of chemicals and water into a rare earth-iron magnet from the outside by virtue of the filling of the voids between the grains with a sealing agent and, at the same time, prevents corrosion by virtue of the formation of a coating layer on the surface thereof. Further, the magnetic characteristics and mechanical strength of the magnet are not spoiled if chemicals which attack the rare earth-iron material are not used.

The term "rare earth-iron magnet" is used herein in a comprehensive sense. That is, the magnet materials may be formed of melt-quenched amorphous ribbons or sputtered thin films of rare earth-iron alloy. The method of making a rare earth-iron magnet is not restricted to the method described in Example 1.

Melt-quenched ribbons being magnetically isotropic by nature are produced as follows: making a starting material, melting the starting material by a high-frequency melting technique, and quenching the molten material rapidly such that it solidifies substantially instantaneously to form an alloy with a substantially amorphous to very finely crystalline microstructure. The resulting ribbon is comminuted, and compacted or hot-pressed into a magnet shape.

On the other hand, the rare earth-iron magnet produced by sintering as shown in Example 1, may obtain magnetically anisotropic permanent magnets for practical purposes. According to the present, a sintered magnet having an extremely excellent corrosion resistance can be obtained even though the material of the magnet inherently has a structure full of voids.

## Claims

1. A method of treating a rare earth-iron magnet consisting of a magnetic phase based on one or more rare earth elements and iron having voids between grains of said magnet, said method characterised by the steps of:
impregnating the magnet by soaking in a pressure reduction vessel containing anaerobic sealing agent to fill said voids;
plating a layer on the surface of said magnet.

2. A method as claimed in claim 1, in which impregnating with said sealing agent comprises impregnating with substantially an acrylic ester, allowing the magnet to rest at room temperature, and removing any uncured residue.

3. A method as claimed in claim 1 or 2, in which said plating layer comprises forming an under layer and subsequently an outer layer.

4. A method as claimed in claim 3, in which forming said under layer comprises electroless copper plating and forming said outer layer comprises electroless nickel plating.

5. A method as claimed in claim 3, further comprising the step of cleaning said magnet prior to plating a layer.

6. A method as claimed in claim 5, in which said plating a layer comprises forming a titanium coating and then a titanium nitride coating.

7. A method as claimed in claim 5 or 6, in which impregnating another sealing agent comprises impregnating with a layer of poly-p-xylene.

8. A rare earth-iron magnet, treated in accordance with any one of the preceding claims in which the magnetic phase comprises Fe, B and R where R is at least one rare earth element including Y.

9. A rare earth-iron magnet as claimed in claim 8 in which the magnetic phase consists essentially of, by atomic percent, 8-30% R, 2-28% B and the balance being Fe with impurities.

## Patentansprüche

1. Verfahren zur Behandlung eines SeltenErde-Eisen-Magneten bestehend aus einer magnetischen Phase auf Grundlage von einem oder mehreren SeltenErde Elementen und Eisen mit Leerstellen zwischen den Körnern des Magneten wobei das Verfahren gekennzeichnet ist durch die Schritte:
Imprägnieren des Magneten durch Durchtränkung in einem Druckreduktionsgefäß, das anaerobes Versiegelungsmittel enthält, um die Leerstellen zu füllen;
Aufbringen einer Beschichtung auf die Oberfläche des Magneten.

2. Verfahren nach Anspruch 1, wobei Imprägnieren mit dem Versiegelungsmittel Imprägnieren mit im wesentlichen einem Acrylester, Ruhenlassen des Magneten bei Raumtemperatur und Entfernen von nicht ausgehärtetem Rückstand umfaßt.

3. Verfahren nach Anspruch 1 oder 2, wobei das Aufbringen der Beschichtung die Bildung einer unteren Schicht und danach die Bildung einer äußeren Schicht umfaßt.

4. Verfahren nach Anspruch 3, wobei die Bildung der unteren Schicht stromlose Kupferbeschichtung und die Bildung der äußeren Schicht stromlose Nickelbeschichtung umfaßt.

5. Verfahren nach Anspruch 3, weiterhin umfassend den Schritt den Magneten vor Aufbringen der Schicht zu reinigen

6. Verfahren nach Anspruch 5, wobei das Aufbringen der Beschichtung die Bildung eines Titanüberzugs und danach eines Titannitridüberzugs umfaßt.

7. Verfahren nach Anspruch 5 oder 6, wobei Imprägnieren eines anderen Versiegelungsmittels Imprägnieren mit einer Schicht aus poly-p-Xylol umfaßt.

8. SeltenErde-Eisen-Magnet, behandelt in Übereinstimmung nach einem der vorhergehenden Ansprüche, in dem die magnetische Phase Fe, B und R umfaßt, wobei R mindestens ein SeltenErde Element einschließlich Y ist.

9. SeltenErde-Eisen-Magnet nach Anspruch 8, in dem die magnetische Phase im wesentlichen aus 8-30 % R, 2-28 % B und dem Rest Fe mit Verunreinigungen auf Basis von Atomprozent besteht.

## Revendications

1. Un procédé de traitement d'un aimant du type fer-terre rare, consistant en phase magnétique basée sur un ou plusieurs éléments de la famille de terres rares et sur du fer, ayant des vides entre des grains de l'aimant, ce procédé étant caractérisé par les étapes suivantes :
on imprègne l'aimant en l'immergeant dans une enceinte sous pression réduite contenant un agent d'obturation anaérobie, pour remplir les vides précités; et
on dépose une couche sur la surface de l'aimant.

2. Un procédé selon la revendication 1, dans lequel l'imprégnation avec l'agent d'obturation comprend les opérations qui consistent à imprégner l'aimant avec pratiquement un ester acrylique, à laisser reposer l'aimant à la température ambiante et à enlever tout résidu non polymérisé.

3. Un procédé selon la revendication 1 ou 2, dans lequel l'étape de dépôt d'une couche comprend la formation d'une sous-couche et ensuite d'une couche extérieure.

4. Un procédé selon la revendication 3, dans lequel la formation de la sous-couche comprend une opération de dépôt chimique de cuivre et la formation de la couche extérieure comprend une opération de dépôt chimique de nickel.

5. Un procédé selon la revendication 3, comprenant en outre l'étape qui consiste à nettoyer l'aimant avant de déposer une couche.

6. Un procédé selon la revendication 5, dans lequel l'étape de dépôt d'une couche comprend la formation d'un revêtement de titane et ensuite d'un revêtement de nitrure de titane.

7. Un procédé selon la revendication 5 ou 6, dans lequel l'imprégnation avec un autre agent d'obturation comprend l'imprégnation avec une couche de poly-p-xylène.

8. Un aimant du type fer-terre rare, traité conformément à l'une des revendications précédentes, dans lequel la phase magnétique comprend Fe, B et R, en désignant par R au moins un élément de la famille des terres rares comprenant Y.

9. Un aimant du type fer-terre rare selon la revendication 8, dans lequel la phase magnétique est essentiellement formée par 8-30% de R et 2-28% de B, en pourcentage atomique, le reste consistant en Fe avec des impuretés.
